# EUROPEAN PATENT APPLICATION

(11) **EP 4 383 095 A1**
(43) Date of publication of application: **12.06.2024**
(21) Application number: 22315308.1
(22) Date of filing: 06.12.2022
(51) Int. Cl.: G06F 16/9035, G06F 16/908

(54) **DATA ENHANCEMENT SYSTEM AND METHOD**

(71) Applicant: Amadeus S.A.S., 06410 Biot (FR)
(72) Inventor: Delahaye, Thierry, 06000 Nice (FR); Cao, Hongliu, 06300 Nice (FR); Wharton, Jessica, 06220 Golfe-Juan Vallauris (FR); De Antonio, Jorge, 28009 Madrid (ES); Georgieva, Atina, 28043 Madrid (ES)
(74) Representative: Samson & Partner Patentanwälte mbB

(57) **Abstract**

Methods, systems, and computer program products for implementing event information enhancement. At an enhancement data server, a data enhancement request from a client device is received. In response to the data enhancement request, a plurality of event records from an event log is obtained. Thereafter, self-enriched information is generated based on at least a part of the event records by aggregating event records based on an entity identifier and an item identifier: Then, the self-enriched information is enhanced with data from a first data source based on a first matching protocol using the entity identifier and/or enhancing the self-enriched information with data from a second data source based on a second matching protocol using the item identifier. Furthermore, at least one entity profile for the at least one entity based on the enhanced self-enriched information is generated and provided to the client device.

## Description

### TECHNICAL FIELD

The present invention generally relates to computers and computer software, and more specifically, to methods, systems, and computer program products for data enhancement.

### BACKGROUND

In many technical areas, event logs are recorded. For example, in a network, an event log is generated for any communication event in that network, e.g., by a firewall or another security device. Another example, is a user application running on a mobile device. These applications or devices produce event logs for any interaction of the user with the application and/or of the application with other websites. This data is highly important to monitor entity's (e.g., user or network client) behavior with respect to one or more items (e.g., trips, products, communication connections) in an environment. However, there may exist difficulties with some of the event log data because the data is not consistent and/or some important features are missing. Consequently, the analysis of the data is difficult, which may impact the security of the environment.

Thus, improved methods, systems, and computer.program products for enhancing the event log data are needed.

### SUMMARY

The present invention is defined by the independent claims.

In a first aspect, a method of data enhancement is presented. The method comprises receiving, at an enhancement data server, a data enhancement request from a client device, wherein the data enhancement request is associated with one or more items for one or more entities. In response to the data enhancement request, the method further comprises obtaining a plurality of event records from an event log, wherein an event record reflects an interaction of an entity with an environment for an item and comprises attributes associated with the item and the entity, and the interaction. The method then also comprises generating self-enriched information for an entity of the one or more entities and an item of the one or more items based on at least a part of the event records by aggregating event records based on an entity identifier and an item identifier and enhancing the self-enriched information with data from a first data source based on a first matching protocol using the entity identifier and/or enhancing the self-enriched information with data from a second data source based on a second matching protocol using the item identifier. Finally, the method comprises generating at least one entity profile for the at least one entity based on the enhanced self-enriched information, and providing the at least one entity profile to the client device.

In a second aspect, a system is presented that is configured to execute the methods as described herein.

In a third aspect, a computer program product is presented that executes the methods as described herein when executed on a computer.

Further aspects are defined by the dependent claims.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

### BRIEF DESCRIPTION OF DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
Figure 1 illustrates an example environment for implementing a process for data enhancement, according to embodiments of the invention.
Figure 2 illustrates example event information enhancement processes based on a collaboration request, according to embodiments of the invention.
Figure 3 illustrates an example process for collaborative event information enhancement based on behavioral data and generating user application profiles, according to embodiments of the invention.
Figures 4A and 4B illustrate an example for generating user profiles from enhanced travel data sets based on matching protocols, behavioral data associated with travel event information, and historical travel data, according to embodiments of the invention.
Figure 5 is a flowchart of an example process for information enhancement, according to embodiments of the invention.
Figure 6 is a block diagram showing an example computer architecture for a computer capable of executing the software components described herein, according to embodiments described herein.

### DETAILED DESCRIPTION

For many purposes, event data is stored in event logs, e.g., collected from applications/websites or within a network and including data about an entity's interactions with a system or environment. The interactions are usually associated with an item (e.g., a product or service, such as a communication connection in an network environment or a trip in a travel application). However, difficulties may arise with some of the event log data because information associated with an item may not be consistent. For example, interactions might not be recorded as linked to a specific item and some important features may be missing from the event data. Thus, the data quality of the data set is poor and therefore the data analysis to monitor client's interactions can be limited. Thus, improved methods, systems, and computer program products for providing systems for enriching event data (e.g., near real-time) are provided herein. Hence, the technology in this patent application is related to systems and methods for implementing a collaboration of event information and enriching the data based on enhancement protocols utilizing behavioral data and historical data. Entity profiles are generated based on the data enhancement for providing enriched information about entity.

In some embodiments, the entity profiles may relate to computers, servers, and the like, and are provided to a client device of an end user, such as an administrator of a network. The entity profiles can then be used by the administrator to detect security issues or the like in the network on a network entity basis. The data enhancement process, also named aggregation process or collaboration process, is based on aggregating event data stored in event records (e.g., based on an entity identifier and/or an item identifier). The enhancement (or aggregation or collaboration) system may select features in the event records that are used to enhance the data, e.g., that are aggregated, such as building a sum of a packet transfer of a plurality of event records relating to the same communication connection. The event records include one or more attributes or set of attributes that define the event and reflect an interaction of the entity with the environment. Event data comprised by an event record may be modified or enhanced by using matching protocols with additional data from one or more distributed data sources. The objective of the method as described is to obtain a high-quality dataset, e.g., with a reduced number of missing values and enriched features coming from different data sources using one or more matching protocols. This enables a better understanding, monitoring, and surveillance of the system.

In another embodiment, entity profiles may relate to user profiles and may be generated based on the data enhancement for providing recommendations to an end user, such as a traveler (e.g., providing travel recommendations for a trip). The user application profile can further be used by merchants for predicted CTRs for the recommendations sent to the end user (e.g., travel recommendations for a traveler for a trip). First, the collaboration process is based on aggregating event data (e.g., generate an identification for a plurality of segments that are associated with an event, such as a trip for a traveler). The collaboration system then selects particular features that are used to enhance the data such as behavioral data. Behavioral data may include interactions with a travel provider website (clicks), session duration, advertisements displayed, etc. Event data may be modified or enhanced by using matching protocols with global distribution system (GDS) data), user data (e.g., behavioral data associated with a particular trip), historical data for related trips, and the like.

In some implementations, the processes described herein can match data comprised by the event records reflecting interactions with the environment, e.g., behavioral data of a user of an application software or communication data of a server in a network, with other data through the use of identifiers, such as an "item_ID" (e.g. a trip_ID for a travel use case or a communication_OS) or a entity_ID (e.g., an email address, which can also be hashed for privacy purposes, for a travel use case, or an IP address in a network use case). Generally, although the systems and methods for the enhancement of the event information are herein mostly described as within the travel industry, the enhancement of the collaboration event information can also be applied in any other industries. For example, a general process may define what the product is in an application, then, based on the information available in the session logs, build an ID (e.g., an item_ID) that matches with back-end (e.g., historical or live) data (e.g., GDS data when product is a flight trip).

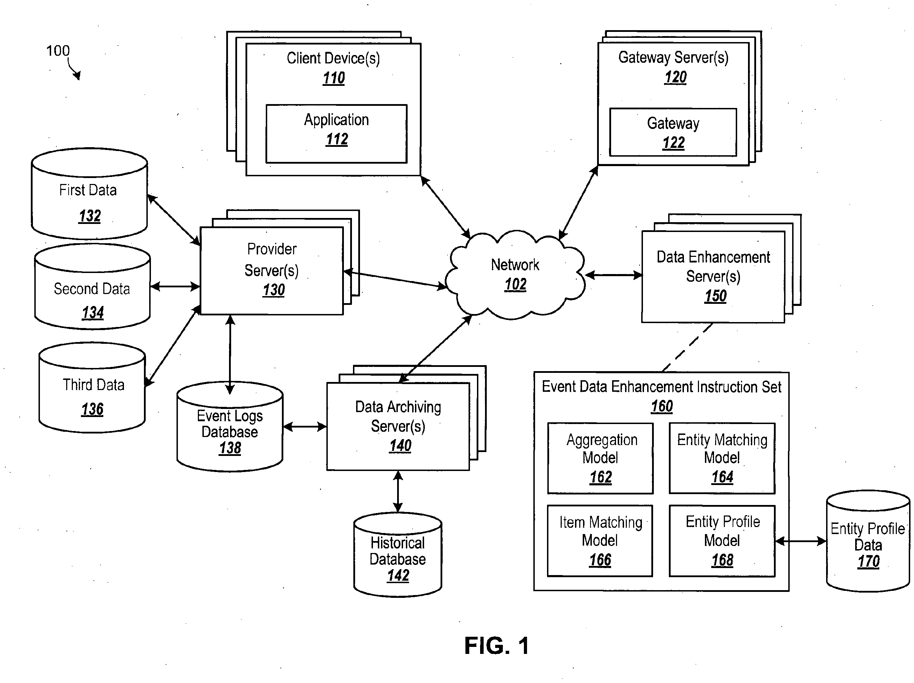

**Figure 1** is an example environment 100 for implementing a process for implementing an enhancement of event information and enriching the data based on matching protocols, according to embodiments of the invention. The example environment 100 includes one or more client devices 110, one or more gateway server(s) 120, one or more provider server(s) 130, one or more data archiving server(s) 140, and one or more event data enhancement server(s) 150, that communicate over a data communication network 102, e.g., a local area network (LAN), a wide area network (WAN), the Internet, a mobile network, or a combination thereof.

The client device 110 (e.g., an electronic device used by a requestor of enhanced data) can include a desktop, a laptop, a server, or a mobile device, such as a smartphone, tablet computer, wearable device (e.g., smartwatch), in-car computing device, and/or other types of mobile devices. The client device 110 includes applications, such as the application 112, for managing a collaboration request (e.g., a data enhancement request) to/from the one or more event data enhancement server(s) 150 via the gateway server(s) 120. The client device 110 can include other applications. The client device 110 (e.g., a travel merchant or an administrator device) initiates a data enhancement request (i.e., collaboration request) via application 112. A collaboration request may include availability search queries by requesting entities (such as clients, applications, browsers installed on user terminals, etc.) in the course of a search (e.g., airline booking search). Additionally, a collaboration request may include an in-application collaboration request after a travel booking has been initiated and/or completed. Alternatively, a collaboration request may also relate to a request from an administrator to receive enhanced data for all clients (entities) in a network for surveillance. A requestor of a collaboration request with a client device 110 via an provider server 130 may include an airline agency, travel agency, metasearch engine, other dedicated global distribution systems (GDS), as for example airlines reservation systems which provide flight search applications for shopping business like flight booking, and the like that want to provide a traveler with recommendations to add to his or her travel itinerary. Alternatively, the requestor may be an administrator of a network, a central server running a surveillance software for a network, and the like, that need to ensure security in the network.

The gateway 122 of the gateway server(s) 120 manages the location of requests received one or more user devices (e.g., a traveler's device) and collaboration requests received from application 112 from the one or more client devices 110. The management protocols of gateway server 120 may be based on a redundant load-balancing system by managing multiple clients (e.g., client device(s) 110) so that a collaboration request is handled by one of the one or more data enhancement server(s) 150. For example, there may be multiple event data enhancement server(s) 150 that are able to service the collaboration request, and the redundant load-balancing system of the gateway server(s) 120 is responsible for ensuring that the collaboration request is performed by one of the capable event data enhancement server(s) 150.

The gateway server(s) 120 may be front end server(s) for managing, collecting, processing, and communicating queries (e.g., collaboration request), resource information, and other data that is stored in the historical database 142 from one or more data archiving server(s) 140. Further, the gateway server(s) 120 may be front end server(s) for managing, collecting, processing, and communicating recommendation results from one or more data enhancement server(s) 150 to the client devices 110 via application 112. In an exemplary embodiment, for an airline booking example, the gateway server(s) 120 may be front end server(s) for collecting, processing, and storing travel information (e.g., flight schedules, flight information such as such as departure and destination airport, airline, departure and return dates, fares, booking classes, passenger information, and the like) from a plurality of external travel systems (e.g., airport information systems, airline information systems, third-party intermediator systems, etc.) via the one or more provider server(s) 130, the one or more data archiving server(s) 140 to access the collective historical database 142, and/or the one or more data enhancement server(s) 150.

The one or more provider server(s) 130 receives and processes data such as first data stored in a first database 132 , second data stored in a second database 134, third inventory data from an third database 136, and the like as real-time data. The one or more provider server(s) 130 stores the data from the multiple sources (e.g., first database 132, second database 134, third database 136, etc.) in the historical database 142 for providing historical data. Additionally, event logs are stored in the event logs database 138 that can be accessed by an provider server 130 and/or a data archiving server 140. The event logs may be collected from applications/websites that may contain rich behavioral data (e.g., data about user interaction with the applications/websites) or via an interface applying a logging protocol in a network.

The one or more event data enhancement server(s) 150 receives and processes, via the event data enhancement instruction set 160, the collaboration request(s) from the gateway server(s) 120. The event data enhancement instruction set 160 includes an aggregation model 162, an entity matching model 164, an item matching model 166, and an entity profile model 168.

The event data enhancement instruction set 160 is configured to implement self-enrichment and data enhancement processes of information (also named collaborative event information) as described herein. In some implementations, the event data enhancement instruction set 160 via the aggregation model 162, generates self-enriched information for an entity of the one or more entities and an item of the one or more items based on at least a part of the event records by aggregating event records based on an entity identifier and an item identifier. In some implementations, generating the self-enriched information includes aggregating attributes for different portions of the same item (e.g., communication connections, trip segments) and generating an identification of the item associated with the collaborative event information. For example, an Item_ID (e.g., a communication_ID, trip_ID etc.) may be generated that includes available attributes, a session identifier (e.g., a session_ID), and/or other features that are matched to belonging to the same item.Event records are aggregated and matched based on an associated Item_ID.

In some implementations, the event data enhancement instruction set 160 via the entity matching model 164, updates (enhances) the self-enriched information from the events logs, i.e., the event records, with data from a first data source based on a first matching protocol using the entity identifier. In some implementations relating to a travel embodiment, updating the collaborative event information based on the first matching protocol (e.g., an entity or user matching protocol) includes matching a first data set associated with the collaborative event information and a second data set associated with a GDS based on an identification associated with the user. The identification may be one or more personal identification information, such as an email address (e.g., an email address), first/last name, phone number, and the like. For example, the entity matching model 164 can obtain the collaborative event information (e.g., data associated with an item_ID), and aggregate the data with data based on behavioral or interaction features associated with the event data using an identification associated with the user (e.g., a hashed email address). In another example, the entity matching model 164 can obtain the generated self-enriched information (e.g., data associated with an entity_ID), and aggregate the data with further data (e.g., historical data such as stored in historical database 142) associated with the entity using an identification associated with the entity (e.g., feature matching associated with the entity).

In some implementations, the event data enhancement instruction set 160 via the item matching model 166, updates (enhances) the collaborative event information with data from a second data source based on a second matching protocol using the item identifier. For example, the item matching model 166 can obtain the generated self-enriched information (e.g., data associated with an item_ID), and aggregate the data with further data (e.g., historical data such as stored in historical database 142) associated with the item using an identification associated with the item (e.g., feature matching associated with the item).

It should be noted that the entity or item identifier used for generating the self-enriched information may be modified for use in the entity matching protocol or the item matching protocol. For example, if the entity identifier is the email address, it may be used in hashed form in the entity matching protocol for ensuring privacy as the entity identifier has to be transmitted for fetching the respective data from the first data source. Or, if the item identifier is composed of a target IP address and a date and time, this information may also be hashed or encrypted before retrieving the data from the second data source.

In some implementations, the event data enhancement instruction set 160 via the item matching model 166, system generates an entity application profile for the entity based on the enhanced self-enriched information. For example, after the self-enriched information is enhanced, the entity profiles are constructed. In some implementations, an entity profile model 168 of the event data enhancement instruction set 160 can store the entity profiles in an entity profile database 170. Reusing the entity profiles (e.g., in another data enhancement process as described herein) improves the computational efficiency.

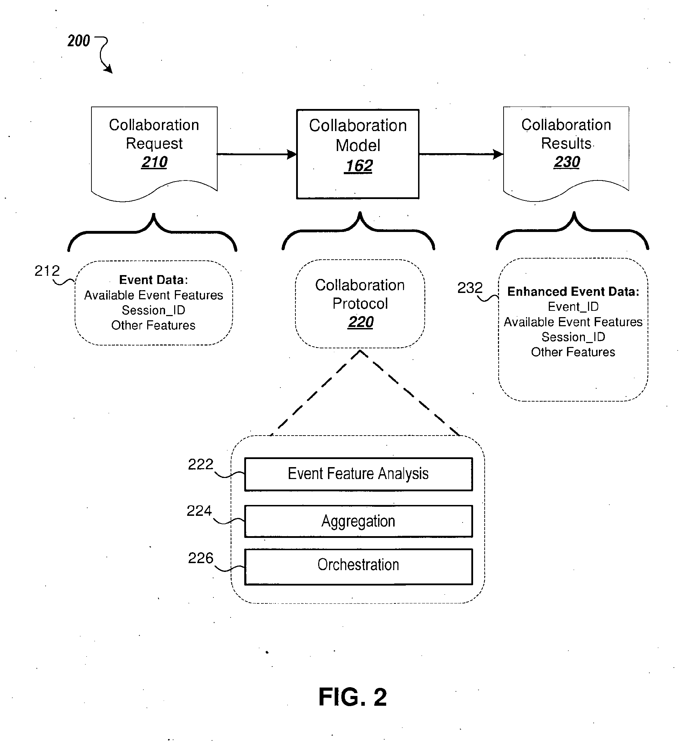

An example routine of implementing a data enhancement protocol for a travel related embodiment as illustrated in the environment of Figure 1 is further discussed herein with reference to the illustrations in Figures 2, 3, 4A, and 4B.. It should be noted that the focus on the travel embodiment in the following paragraphs is only for illustrative purposes and should not be considered to be limiting. The present disclosure for the travel embodiment is applicable to all systems using event logs that require data enhancement as will be apparent to the skilled person.

A system that can use event logs is associated with online advertising. Online (e.g., web-based, mobile, or in-app) advertising differs from advertising in traditional media in its degree of personalized audience targeting. For example, while broadcast media advertising, such as television advertising, aims to reach a target demographic defined by broad characteristics such as age-group, socioeconomic status, and/or general interests, online advertising aims to reach individuals having a particular interest in the product, service, or information that is presented.

Highly personalized audience targeting technology has led to the development of business models that are specific to online advertising. For example, it is now common for websites that provide news, self-enriched information, and other content of interest to targeted users, to host third-party advertisements as a means for generating revenue. Advertisers whose advertisements appear on these websites may pay the operator on the basis of viewing opportunities or impressions (commonly measured as 'cost per thousand impressions', a.k.a. CPM), on the basis of a cost per click (CPC), or according to some other measure of performance. The actual selection of an advertisement to be placed on a web page presented to an individual user may be based, at least in part, on a bidding process whereby an advertiser who is willing to pay a higher CPM, CPC, or other cost measure, is more likely to have its advertisement presented to the user.

According to one common model, the bidding process is facilitated by an 'ad exchange platform'. An ad exchange is a technology platform that implements a digital marketplace allowing advertisers and publishers of web sites and other online content to buy and sell advertising space, often through real-time auctions.

An ad exchange maintains a 'pool' of ad slots. Publishers contribute their ad slots, e.g., available advertising slots embedded within web pages served to users, into the pool. Buyers can then bid for the slots that they wish to purchase. Bidding decisions are often made in real time based on information such as the previous behavior of the user while an ad is being served to, time of day, device type, ad position, and so forth. In practice, these bidding decisions must themselves be made very rapidly, e.g., in at most a few tens of milliseconds, using technology platforms commonly known as demand side platforms (DSPs). Since there is a real cost to the advertiser in purchasing impressions through an ad exchange, the performance of technologies and algorithms deployed in a DSP for assessing the potential 'value' of a user to make a bid decision may have a significant business impact.

By way of example, an average click through rate (CTR) for web-based display ads is around 0.05%, i.e., five clicks per 10,000 impressions. Where ad slots are purchased via an ad exchange, every impression represents a cost (i.e., the price paid following a winning bid). However, where a CPC model is employed, only 0.05% of impressions, on average, result in the generation of revenue. A low CTR thus results in an inefficient use of technical resources (such as the processing resources of the DSP) and a higher cost to successful advertisers (since a smaller number of 'clicks' must cover the cost of all impressions). Furthermore, a low CTR is indicative of a lack of suitability or relevance of the displayed advertising to online users.

It is, therefore, highly desirable to deploy technologies in DSP platforms that result in higher CTR. Such technologies benefit DSP operators by enriching the utilization of technical resources and increasing revenues generated from user interactions with advertising content. Advertisers also benefit from more effective and successful placement of ads, resulting in greater click-through, and delivery of a larger audience of potential interested customers. Online users also benefit, since higher CTR is generally achieved by placement of ads having greater suitability and relevance to users.

For the travel industry, for example, one common problem is that event data is stored in event logs collected from applications/websites that includes data about a user's interaction with a system. However, some industries, especially with the travel industry, have difficulties with some of the event log data because trip data is not consistent (e.g., the associated number of trips per user over time (should always be the same or increase), and some important features are missing, such as departure time and destination. Thus, the data quality of the data set is poor and therefore the data analysis and machine learning modelling to predict and/or monitor CTRs to increase advertisement revenue can be limited. Thus, improved methods, systems, and computer program products for providing systems for enriching event data (e.g., near real-time) are needed.

Advantageously, embodiments of the invention may employ a machine learning model for computation of estimates of probability of user interaction with the content associated with the event (e.g., clicks or views off an advertisement or a travel recommendation). The machine learning model may be trained based upon matching of aggregated content placement events with aggregated user interaction events, and may be configured for efficient representation to enable rapid computation of the estimates of probability of user interaction with the content, e.g., in under a few tens of milliseconds. In embodiments of the invention, the machine learning model is continuously or periodically trained online, and the representation used for computation of the estimates of probability is periodically-updated to ensure that the estimates are based upon sufficiently current information. In embodiments of the invention, the machine learning model is trained before and after the data enhancement techniques described herein (e.g., generating collaborative event information based on aggregation, user matching protocol with behavioral data, event matching protocol with historical data, etc.).

More specifically, this technology - in an travel example - includes a process that receives a data enhancement request (also referred to herein as a collaboration request) from a client device associated with an item (e.g., a travel event, such as a trip) for a user, where the trip includes one or more segments during a time period associated with the user. The process may further include obtaining, based on the data enhancement request, event data for a plurality of segments associated with one or more trips from an event log (e.g., for the same user such as a frequent traveler, or for a plurality of users), the event data (e.g., event records) including one or more sets of event attributes for each of the plurality of users. The process may further include generating collaborative event information for the event associated with the user (e.g., a particular traveler) of the plurality of segments based on the event data. The process may further include updating (e.g., enriching) the collaborative event information based on a user matching protocol and behavioral data associated with the collaborative event information for the user. The process may further include updating the collaborative event information based on an event matching protocol and historical data associated with one or more of the events associated with the event. The process may further include generating a user application profile associated with the user based on the behavioral data and the collaborative event information associated with the event. The process may further include providing the user application profile to the client device.

**Figure** 2 illustrates an example collaboration (i.e. aggregation) event data enhancement processes based on a collaboration (i.e. data enhancement) request, according to embodiments of the invention on a specific airline industry example.

In particular, Figure 2 illustrates an example environment 200 for implementing a collaboration event data enhancement process to determine collaboration results 230 based on receiving a collaboration request 210. An objective for the collaboration model (e.g., aggregation model) 162 is to generate collaborative event information for the trip associated with the user based on the event data for the plurality of users. For example, airline industry may desire to aggregate event data and generate an identification for a plurality of segments that are associated with a single trip, such as a single trip for a traveler that may include different segments of the trip. For example, the collaboration model 162 of the event data enhancement instruction set 160, stored on a data enhancement server 150, receives a collaboration request 210 (e.g., from a client device 110). The collaboration request 210for a particular trip may include available trip features, a session identification, and other features associated with the particular trip.

The collaboration model 162 initiates a collaboration event data enhancement protocol 220 to generate collaboration results 230. In some implementations, the collaboration event data enhancement protocol 220 may include, for example, an event feature analysis module 222, an aggregation module 224, and an orchestration module 226 to implement the processes. For example, the event feature analysis module 222 may access event data in the event logs database for a particular user and/or trip. Additionally, the aggregation module 224 can aggregate the event log data. The collaboration event data enhancement protocol 220 further includes an orchestration module 226 for implementation of the collaboration results 230 between a client device 110, an provider server 130, and one or more data enhancement server(s) 150.

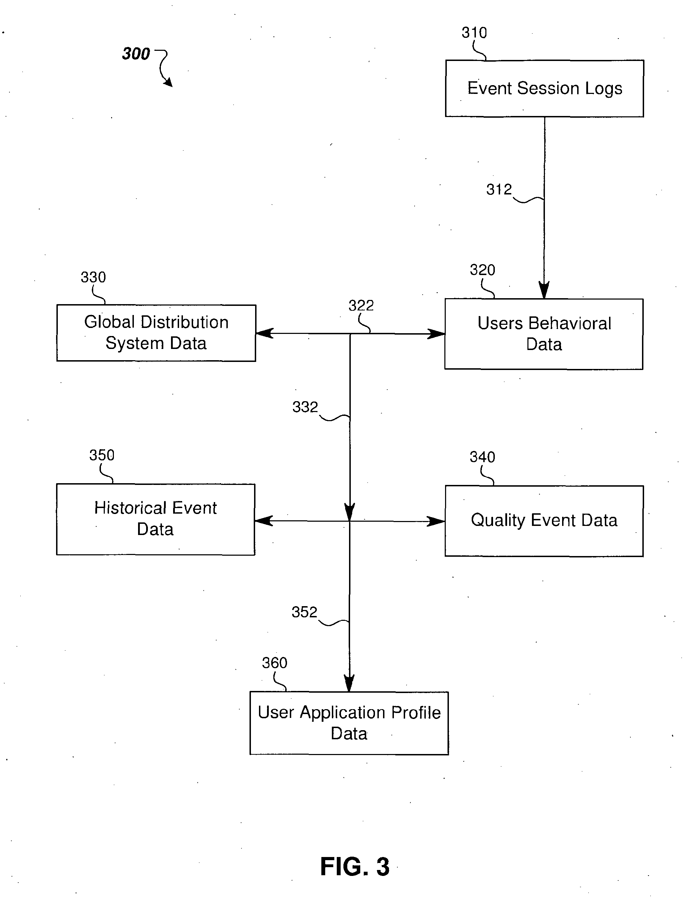

**Figure** 3 illustrates an example environment 300 for collaborative event information enhancement based on behavioral data and historical event data, and generating user application profiles, according to embodiments of the invention. Operations of the process illustrated in environment 300 can be implemented, for example, by a system that includes one or more data processing apparatus, such as the data enhancement server 150 of Figure 1. The process can also be implemented by instructions stored on computer storage medium (e.g., event data enhancement instruction set 160), where execution of the instructions by a system that includes a data processing apparatus cause the data processing apparatus to perform the operations of the process of environment 300.

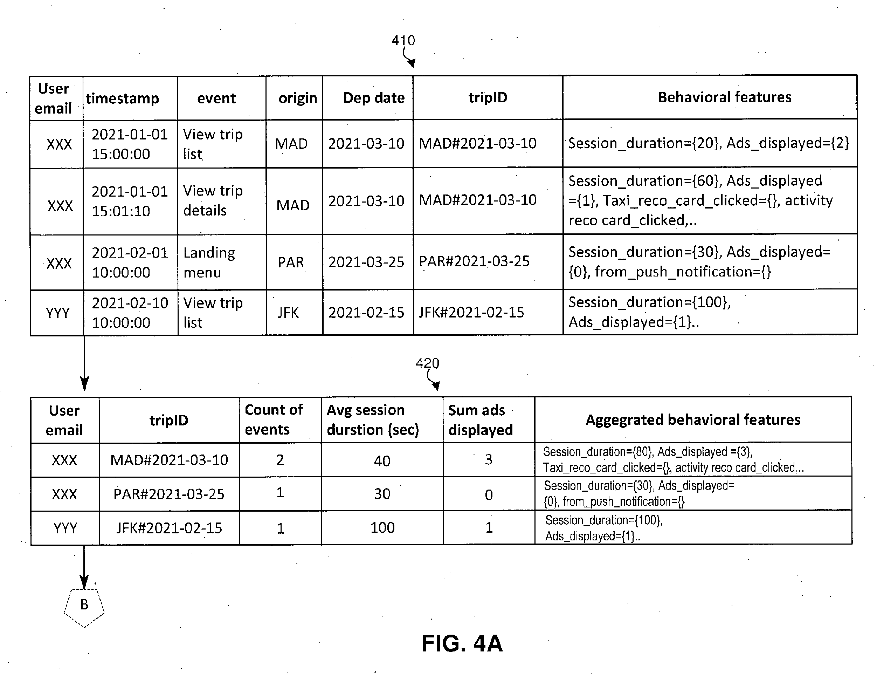

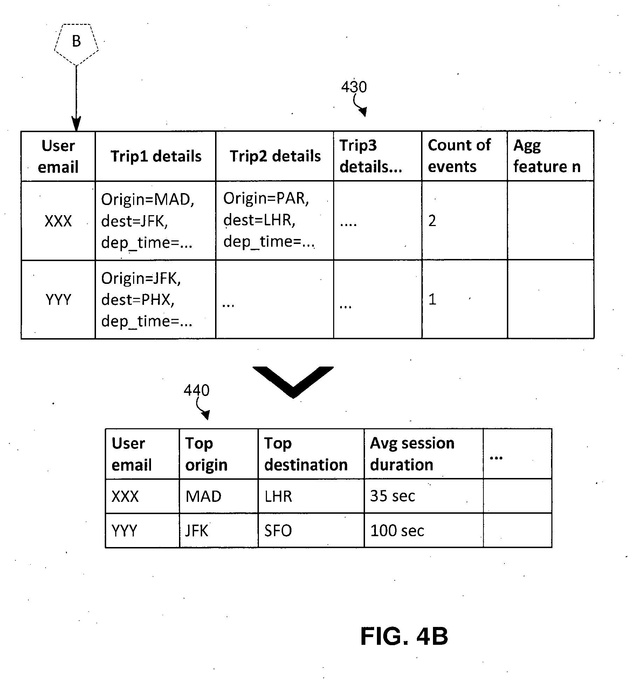

The system obtains event session logs 310 (e.g., via event logs database 138) and builds an item identification (Item_ID) for a particular item associated with a user via event aggregation (312). For example, based on the item identification, the system can then obtain associated behavioral data for the user associated with the item from the user's behavioral data 320. The system then accesses global data from the global distribution system database 330 and performs user matching protocol (e.g., via personal identification information, such as a hashed email address associated with the user) (322). After the system performs user matching protocol with the GDS data and the user's behavioral data, the system performs a quality improvement protocol based on item matching (332). The system can access the historical event or item data 350 to determine and incorporate historical item information that is consistent with or matches the feature data for the particular item. The system can further access quality item data 340 associated with the item (e.g., feature data associated with quality trip information). After accessing the historical data and matching with the feature data for the quality data, the system can construct a user application profile (352) and store the profile in a user application profile database 360. An example illustration for the travel industry using data tables for the example environment 300 for collaborative event information enhancement based on behavioral data and historical item or event data, and generating user application profiles, is further illustrated herein with Figures 4A and 4B.

**Figures 4A** **and** **4B** illustrate an example for generating user profiles from enhanced travel data sets based on matching protocols, behavioral data associated with travel information, and historical travel data, according to embodiments of the invention. In particular, Figures 4A and 4B illustrate, utilizing data tables, a use case scenario for the processes described herein (e.g., for example environment 300 of Figure 3) based on the travel industry. For example, data table 410 is an example excerpt from an event log that includes travel information for two users. The data table 410 includes user and trip identification information, such as user email, timestamp of a flight segment, an event header, origin information, departure date, a trip identification, and associated behavior features for each trip segment. The associated behavior features, as illustrated, may include a session duration, advertisements displayed to the user during the session, user activity during the session (e.g., clicks or booking an activity such as a taxi), and any push notifications send to the user. A data enhancement system based on protocols discussed herein, can then group the data from data table 410 by an email address (e.g., for a particular user) and aggregate the data for the particular user based on the trip identification (e.g., triplD). Data table 420 includes columns for the identified features from the behavioral data, as well as aggregates the data entries that have the same triplD. For example, as illustrated in data table 420, the same triplD "MAD#2021-03-10" was identified and aggregated as one data entry. In some implementations, additional features may be included and aggregated in separate additional columns in the data table 420. The additional features may be based on the item-based features.

As illustrated in Figure 4B, data table 430 illustrates the item matching protocols described herein to match the trip details with GDS data and historical trip data for each particular user based on the user identifier email address (e.g., user email XXX and user email YYY). For example, data table 430 illustrates an example of data quality enrichment for obtained data from data table 410 and data table 420. For example, previous data sets may have only included a few trip details for single trip, but the data has now been enriched, and data table 430 illustrates that included historical trip information and all the trip details. Data table 440 illustrates an example of the generated user application profiles for each user. As each particular user takes trips, the data may be added to his or her profile and that data may be used to determine particular travel recommendations based on the user data. For example, user application profiles may be generated for providing recommendations to end user's (e.g., providing travel recommendations for a trip). The user application profile can further be used by merchants for predicted CTRs for the recommendations sent to the end user (e.g., travel recommendations for a traveler for a trip).

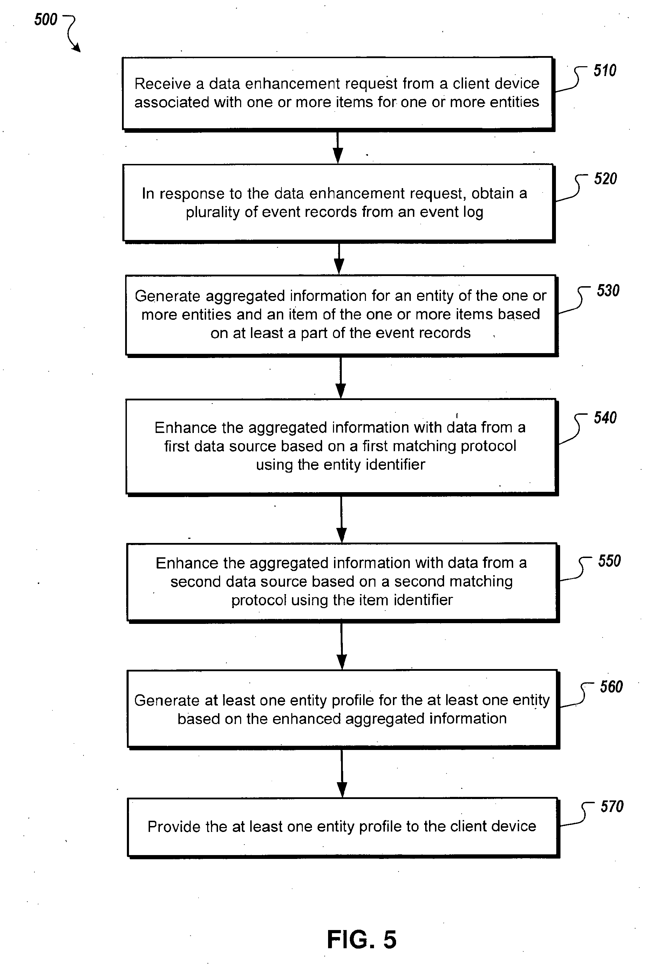

**Figure** 5 illustrates a flowchart of an example process 500 for implementing an enhancement of event information and enriching the data based on enhancement protocols according to embodiments of the invention. Operations of the process 500 can be implemented, for example, by a system that includes one or more data processing apparatus, such as the one or more event data enhancement server(s) 150 of Figure 1. The process 500 can also be implemented by instructions stored on computer storage medium (e.g., event data enhancement instruction set 160), where execution of the instructions by a system that includes a data processing apparatus causes the data processing apparatus to perform the operations of the process 500.

The system receives a data enhancement request from a client device associated with one or more items for one or more entities (510). In some implementations, the data enhancement request is associated with a travel event (e.g., a traveler booking an airline ticket from an origin to a destination). In some other implementations, the data enhancement request is associated with an communication event in a network. In some implementations, the item (e.g., the travel event for the user or a communication of a server in a network) includes one or more segments (segments belonging to the same travel event/trip, segments of a communication route in a network) and may happen during a time period associated with the item and the user (in the travel example) or with the item and the network entity (in the network communication example). For example, as illustrated in Figure 1, a client device 110 initiates a data enhancement request (e.g., also referred to as a collaboration request, such as collaboration request 210) by a requestor via application 112 based on an item (e.g., a booked trip, communication event) associated with a user (e.g., traveler) or a network entity (e.g., server). In the travel example, a requestor of a data enhancement request (e.g., collaboration request 210) may include an airline agency, travel agency, metasearch engine, other dedicated global distribution systems (GDS), as for example airlines reservation systems which provide flight search applications for shopping business like flight booking, and the like, that are looking to increase advertising revenue by providing further recommendations for travel booking associated with the travel event (e.g., taxi, hotel, activity, etc.)

The system, in response to the data enhancement request, obtains a plurality of event records from an event log (520). An event record reflects an interaction of an entity with an environment for an item and comprises attributes associated with the item and the entity, and the interaction. For example, the event data enhancement instruction set 160, stored on one or more event data enhancement server(s) 150, receives a collaboration request 210 (e.g., from a client device 110 via gateway 122) and determines collaboration results 230. In some travel related implementations, the event record, i.e., event data includes one or more sets of event attributes for each of a plurality of users (e.g., other traveler information associated with a similar travel event or segments of a travel event associated with the first travel event for the initial traveler for the request). For example, the event attributes may include a user interacting with an application, origin and destination data associated with the event/trip, a user identification (e.g., email, ID number, etc.) a departure date, a trip duration, and the like. For example, as illustrated in the example environment 100 of Figure 1, an event data enhancement instruction set 160 can receive a collaboration request and access event data from the event logs database 138 and market data from the historical database 142, or access real-time market data from the revenues management database (e.g., first database) 132, bookings database (e.g. second database) 134, and/or the inventory database (e.g. third dabase) 136. Market data may include multiple sets of origin and destination information, past trips, past user interactions with recommendations, location information associated with the user or segments of the event, and the like. The market data may include user specific information (e.g., past trips, past recommendation offers, etc., specific for one traveler), or information related to the origin and destination for a plurality of travelers.

The system generates self-enriched information for an entity of the one or more entities and an item of the one or more items based on at least a part of the event records (530). Generating the self-enriched information is achieved by aggregating event records based on an entity identifier and an item identifier, e.g., a self-enrichment process. In some implementations, generating the collaborative event information includes aggregating attributes for different segments of an item (e.g., aggregating user interactions and behaviors for a trip), and generating an identification of the item associated with the collaborative event information. For example, an Item_ID (e.g., a trip_ID, communication_ID, product_ID) may be generated that includes available attributes, a session identifier (e.g., a session_ID), and/or other features that are matched to belonging to the same item. For example, as illustrated at table 420 of Figure 4A, event data and behavioral features are aggregated and matched based on the associated "triplD".

The system updates (enhances) the self-enriched information with data from a first data source based on a first matching protocol using the entity identifier (540). In some implementations, updating the collaborative event information is based on the first (e.g., user or entity) matching protocol and the behavioral data associated with the collaborative event information for the user and includes matching a first data set associated with the collaborative event information with a second data set associated with a GDS based on an identification associated with the user (e.g., personal identifying data, such as a hashed email address, first/last name, phone number, etc.). For example, the event data enhancement instruction set 160 includes an entity matching model 164 that can obtain the collaborative event information (e.g., data associated with an item_ID), such as table 410, and aggregate the data with market data based on the behavioral features associated with the event data using an identification associated with the user (e.g., personal identifying information, such as a hashed email address, first/last name, phone number, etc.).

In some implementations, the behavioral data (e.g., interaction data) includes at least one of the interactions with one or more websites (e.g., clicks) associated with the event, a session duration, and content displayed during the interaction with the one or more websites (e.g., advertisements displayed).

The system updates (enhances) the self-enriched information with data from a second data source based on a second matching protocol using the item identifier(550). For example, the event data enhancement instruction set 160 includes an second (e.g. item) matching model 166 that can obtain the collaborative event information (e.g., data associated with an item_ID), such as table 410, and aggregate the data with historical event data (e.g., historical event data 350 such as stored in historical database 142) associated with the event data using an identification associated with the event (e.g., feature matching associated with the event, such as user historical trips for the user from a GDS).

The system generates at least one entity profile for the at least one entity based on the enhanced self-enriched information (560). For example, as illustrated in Figure 3, after the event information is enhanced from event matching and quality improvement based on the historical event data 350 and quality event data 340, the application profiles are constructed via action 352. In some implementations, an entity profile model 168 of the event data enhancement instruction set 160 can store the user profiles in the entity profile database 170.

The system provides the at least one entity profile to the client device (570). For example, after the collaboration results 230 are compiled at the event data enhancement instruction set 160 at the one or more event data enhancement server(s) 150 (e.g., after selecting and implementing a collaboration event data enhancement protocol 220), the entity profile may be generated and/or updated, and provided to a client (e.g., a merchant, an administrator and such) in order to determine which actions to take, e.g., which security measures to take in the network or which recommendations (e.g., advertisements) to provide to an end user (e.g., a traveler) at a user device via an API. For the travel example, the user profiles include enhanced (e.g., past and present) trip and behavioral information that can be used by the application owners (e.g., merchants) to better personalize the user experience and improve the recommendations. The collaboration results 230 are sent to the requester (e.g., client device 110 via gateway 122) in response to the collaboration request 210. In some implementations, the selections for the collaboration results 230 are listed and based on expected CTR for recommendations associated with the merchant or associated merchants (e.g., in order of the highest likelihood that a user will click and potentially book a recommended service, such as ground transportation). In some implementations, the selected recommendations are further filtered based on associated business rules for the requesting entity (e.g., an airline that partners with a particular ground transportation service provider may be listed above another ground transportation service).

In some implementations, aggregating event records comprises generating the item identifier for an event record based on at least part of the attributes. For example, if there is no identifier of the item present in an event record, such an identifier is generated. The item identifier may be based on part of the attributes, e.g., attributes reflecting the item. In the travel example, the item identifier (trip_ID) may be generated by appending the departure date and time to the departure city code if this information is present in the event records. In the communication example, the item identifier (communication_ID) may be generated by appending the date and time of the connection to the target IP address. If an item identifier is already present in the event records, e.g., such as a booking number of that trip or a unique identifier of that connection, this identifier can be taken as such or enhanced or amended by using the attributes if needed. The item identifier can also be generated depending on a posterior analysis and take different values or fields into account for different kinds of enriched features. Hence, the grouping according to the item identifier may be different depending on the specific use case.

In some implementations, aggregating event records based comprises generating the entity identifier for an event record based on at least part of the attributes. For example, if there is no identifier of the entity present in an event record, such an identifier is generated. The entity identifier may be based on part of the attributes, e.g., attributes reflecting the entity. If an entity identifier is already present in the event records, e.g., such as a user name of an user account of the traveler or a source IP address of the server, this identifier can be taken as such or enhanced or amended by using the attributes if needed.

In some implementations, the first data source and the second data source are the same data source, and the first matching protocol and the second matching protocol are applied in combination. Other implementations are possible, too. So may the first or second data sources also be distributed data sources. Hence, the first data source may be a distributed data source and/or the second data source may be a distributed data source.

In some implementations, the process 500 also comprises enhancing the self-enriched information with historical item data from a third data source based on the first matching protocol and/or the second matching protocol. For example, by using the entity identifier, previous items (e.g., historical trips) for the entity stored in a historical database, for which no data may be included in the event records, can be fetched. Additionally, by using the item identifier data of other entities having the same item in the past can be aggregated with the event records, The third data source may be the same data source as the first or second data source or a different data source.

In some implementations, the generated self-enriched information comprises one or more flags, wherein a flag indicates that an attribute is missing in the generated self-enriched information (e.g., a arrival time is missing in the travel example), wherein enhancing the self-enriched information based on the first matching protocol and/or the second matching protocol comprises retrieving data from the first data source or second data source for the missing attributes.. Additionally or alternatively, data can be also be retrieved from the third data source. The concept of flags serves to indicate if a feature is missing in the event record database or not. Hence, based on the flags, it can be determined whether a field has to be requested via a matching protocol (flag = false) or not (flag = true). This particularly saves time and computation resources

In some implementations, generating the at least one entity profile comprises aggregating the data of the enhanced self-enriched information of the one or more items for an entity in one data set. Thereby, the number of data sets to store for the entity profile can be reduced to one that comprises aggregated data. In such an example, it is further possible to define which data shall be stored in the entity profile, thereby reducing the required memory and allowing flexibility.

In some implementations, the data enhancement request is transmitted periodically, e.g., every day at the same time, wherein the method further comprises, before generating the self-enriched information, fetching self-enriched information previously generated and/or enriched from a fourth data source. In such an implementation, generating the self-enriched information is further based on the fetched self-enriched information. By storing aggregated information - which is possible at any stage of the process, i.e., with any required aggregation level - this information can be reused and computational requirements can be significantly reduced.

In some embodiments, the entity is an entity in a network environment and the entity identifier comprises identifying information of the entity that includes an IP address, a MAC address, another network identifier, a description of the entity, or a combination thereof. In these embodiments, the item may be a communication connection, wherein the attributes comprise date and time of the communication connection, an entity identification, a packet count of the connection, a duration of the connection, information about interactions with one or more other entities in the network environment associated with the communication connection, or a combination thereof.

In some implementations, the process 500 further includes updating (enhance) the collaborative event information based on a machine-learning model. For example, the machine learning model may include a gradient boosting model, random forest, and the like. In some implementations, the machine learning model is trained on data for a large set of user interaction data (e.g., origin-destination pairs, days before departure, recommendations shown and corresponding clicks, etc.). In some implementations, the machine learning model is configured to predict expected click through rate (CTR) data associated with the collaborative event information. For example, embodiments of the invention employ a machine learning model for computation of estimates of probability of user interaction with the content associated with the event (e.g., clicks or views off an advertisement or a travel recommendation). The machine learning model may be trained based upon matching of aggregated content placement events with aggregated user interaction events, and may be configured for efficient representation to enable rapid computation of the estimates of probability of user interaction with the content, e.g., in under a few tens of milliseconds. In embodiments of the invention, the machine learning model is continuously or periodically trained online, and the representation used for computation of the estimates of probability is periodically-updated to ensure that the estimates are based upon sufficiently current information. In embodiments of the invention, the machine learning model is trained before and after the data enhancement techniques described herein. For example, the machine learning model may implement, and subsequently improve the performance of, the data enhancement techniques such as training the machine learning model on generating collaborative event information based on aggregation, user matching protocol with behavioral data, event matching protocol with historical data, and the like.

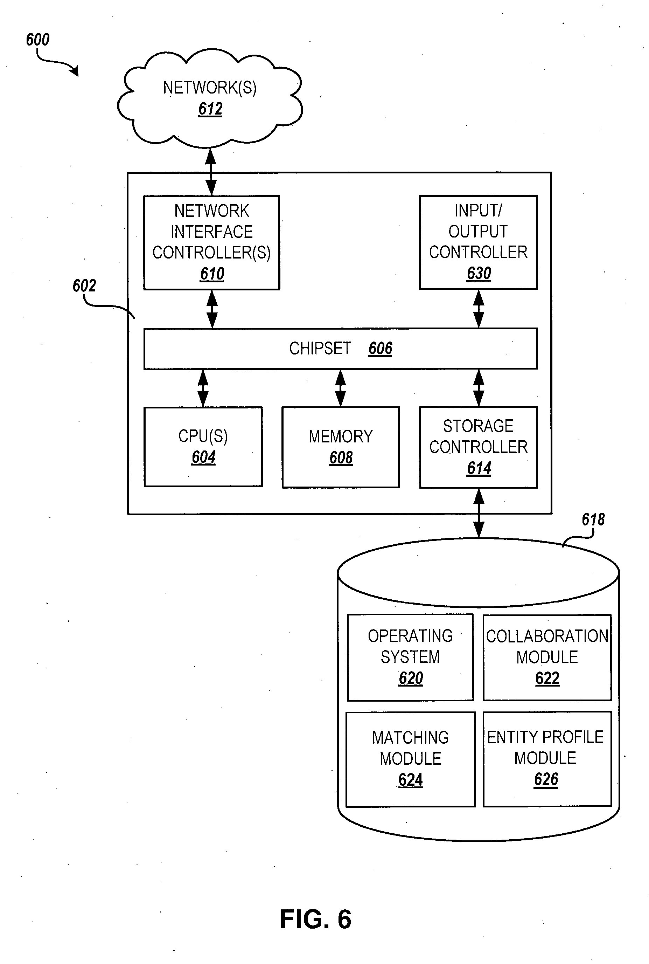

**Figure 6** illustrates an example computer architecture 600 for a computer 602 capable of executing the software components described herein for the sending/receiving and processing of tasks for the CA components. The computer architecture 600 (also referred to herein as a "server") shown in Figure 6 illustrates a server computer, workstation, desktop computer, laptop, or other computing device, and may be utilized to execute any aspects of the software components presented herein described as executing on a host server, or other computing platform. The computer 602 preferably includes a baseboard, or "motherboard," which is a printed circuit board to which a multitude of components or devices may be connected by way of a communication bus or other electrical communication paths. In one illustrative embodiment, one or more central processing units (CPUs) 604 operate in conjunction with a chipset 606. The CPUs 604 can be programmable processors that perform arithmetic and logical operations necessary for the operation of the computer 602.

The CPUs 604 preferably perform operations by transitioning from one discrete, physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits, including registers, adders-subtractors, arithmetic logic units, floating-point units, or the like.

The chipset 606 provides an interface between the CPUs 604 and the remainder of the components and devices on the baseboard. The chipset 606 may provide an interface to a memory 608. The memory 608 may include a random-access memory (RAM) used as the main memory in the computer 602. The memory 608 may further include a computer-readable storage medium such as a read-only memory (ROM) or non-volatile RAM (NVRAM) for storing basic routines that that help to startup the computer 602 and to transfer information between the various components and devices. The ROM or NVRAM may also store other software components necessary for the operation of the computer 602 in accordance with the embodiments described herein.

According to various embodiments, the computer 602 may operate in a networked environment using logical connections to remote computing devices through one or more networks 612, a local-area network (LAN), a wide-area network (WAN), the Internet, or any other networking topology known in the art that connects the computer 602 to the devices and other remote computers. The chipset 606 includes functionality for providing network connectivity through one or more network interface controllers (NICs) 610, such as a gigabit Ethernet adapter. For example, the NIC 610 may be capable of connecting the computer 602 to other computer devices in the utility provider's systems. It should be appreciated that any number of NICs 610 may be present in the computer 602, connecting the computer to other types of networks and remote computer systems beyond those described herein.

The computer 602 may be connected to at least one mass storage device 618 that provides non-volatile storage for the computer 602. The mass storage device 618 may store system programs, application programs, other program modules, and data, which are described in greater detail herein. The mass storage device 618 may be connected to the computer 602 through a storage controller 614 connected to the chipset 606. The mass storage device 618 may consist of one or more physical storage units. The storage controller 614 may interface with the physical storage units through a serial attached SCSI (SAS) interface, a serial advanced technology attachment (SATA) interface, a fiber channel (FC) interface, or other standard interface for physically connecting and transferring data between computers and physical storage devices.

The computer 602 may store data on the mass storage device 618 by transforming the physical state of the physical storage units to reflect the information being stored. The specific transformation of physical state may depend on various factors, in different embodiments of the invention of this description. Examples of such factors may include, but are not limited to, the technology used to implement the physical storage units, whether the mass storage device 618 is characterized as primary or secondary storage, or the like. For example, the computer 602 may store information to the mass storage device 618 by issuing instructions through the storage controller 614 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computer 602 may further read information from the mass storage device 618 by detecting the physical states or characteristics of one or more particular locations within the physical storage units.

The mass storage device 618 may store an operating system 620 utilized to control the operation of the computer 602. According to some embodiments, the operating system includes the LINUX operating system. According to another embodiment, the operating system includes the WINDOWS^{®} SERVER operating system from MICROSOFT Corporation of Redmond, Wash. According to further embodiments, the operating system may include the UNIX or SOLARIS operating systems. It should be appreciated that other operating systems may also be utilized. The mass storage device 618 may store other system or application programs and data utilized by the computer 602, such as a collaboration module 622 (e.g., aggregation model 162), a matching model 624 (e.g., entity matching model 164 and item matching model 166), and a entity profile model 626 (e.g., entity profile model 168), according to embodiments described herein.

In some embodiments, the mass storage device 618 may be encoded with computer-executable instructions that, when loaded into the computer 602, transforms the computer 602 from being a general-purpose computing system into a special-purpose computer capable of implementing the embodiments described herein. These computer-executable instructions transform the computer 602 by specifying how the CPUs 604 transition between states, as described above. According to some embodiments, from the event data enhancement server(s) 150 perspective, the mass storage device 618 stores computer-executable instructions that, when executed by the computer 602, perform portions of the process 500, for implementing a recommendation algorithm selection system, as described herein. In further embodiments, the computer 602 may have access to other computer-readable storage medium in addition to or as an alternative to the mass storage device 618.

The computer 602 may also include an input/output controller 630 for receiving and processing input from a number of input devices, such as a keyboard, a mouse, a touchpad, a touch screen, an electronic stylus, or other type of input device. Similarly, the input/output controller 630 may provide output to a display device, such as a computer monitor, a flat-panel display, a digital projector, a printer, a plotter, or other type of output device. It will be appreciated that the computer 602 may not include all of the components shown in Figure 6, may include other components that are not explicitly shown in Figure 6,or may utilize an architecture completely different than that shown in Figure 6.

In general, the routines executed to implement the embodiments of the invention, whether implemented as part of an operating'system or a specific application, component, program, object, module or sequence of instructions, or even a subset thereof, may be referred to herein as "computer program code," or simply "program code." Program code typically includes computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A computer-implemented method of data enhancement comprising:
receiving, at an enhancement data server, a data enhancement request from a client device, wherein the data enhancement request is associated with one or more items for one or more entities;
in response to the data enhancement request, obtaining a plurality of event records from an event log, wherein an event record reflects an interaction of an entity with an environment for an item and comprises attributes associated with the item and the entity, and the interaction;
generating self-enriched information for an entity of the one or more entities and an item of the one or more items based on at least a part of the event records by aggregating event records based on an entity identifier and an item identifier;
enhancing the self-enriched information with data from a first data source based on a first matching protocol using the entity identifier and/or enhancing the self-enriched information with data from a second data source based on a second matching protocol using the item identifier;
generating at least one entity profile for the at least one entity based on the enhanced self-enriched information; and
providing the at least one entity profile to the client device.

2. The method of claim 1, wherein aggregating event records based comprises:
generating the item identifier for an event record based on at least part of the attributes.

3. The method of claim 1 or claim 2, wherein aggregating event records based comprises:
generating the entity identifier for an event record based on at least part of the attributes.

4. The method of any one of the preceding claims, wherein the first data source and the second data source are the same data source, and wherein the first matching protocol and the second matching protocol are applied in combination.

5. The method of any one of the preceding claims further comprising enhancing the self-enriched information with historical item data from a third data source based on the first matching protocol and/or the second matching protocol.

6. The method of any one of the preceding claims, wherein the generated self-enriched information comprises one or more flags, wherein a flag indicates that an attribute is missing in the generated self-enriched information, wherein enhancing the self-enriched information based on the first matching protocol and/or the second matching protocol comprises retrieving data from the first data source or second data source for the missing attributes.

7. The method of any one of the preceding claims, wherein generating the at least one entity profile comprises aggregating the data of the enhanced self-enriched information of the one or more items for an entity in one data set.

8. The method of any one of the preceding claims, wherein the data enhancement request is transmitted periodically, wherein the method further comprises:
before generating the self-enriched information, fetching self-enriched information previously generated and/or enhanced from a fourth data source;
wherein generating the self-enriched information is further based on the fetched self-enriched information.

9. The method of any one of the preceding claims, wherein the entity is an entity in a network environment and the entity identifier comprises identifying information of the entity that includes an IP address, a MAC address, another network identifier, a description of the entity, or a combination thereof.

10. The method of claim 9, wherein the item is a communication connection, wherein the attributes comprise date and time of the communication connection, an entity identification, a packet count of the connection, a duration of the connection, information about interactions with one or more other entities in the network environment associated with the communication connection, or a combination thereof.

11. The method of any one of the preceding claims, wherein the entity is a user and the entity identifier comprises personal identifying information of the user that includes a hashed email address, a first and last name, a phone number, or a combination thereof.

12. The method of claim 4, wherein the environment is a mobile application, wherein the attributes comprise information about interactions with one or more websites associated with the item, a session duration, and/or content displayed during an interaction with one or more websites.

13. The method of claim 4 or claim 5, wherein the item is a trip, wherein the attributes comprise travel information associated with the trip, and wherein the attributes comprise origin and destination information, a user identification (ID), a departure date, a trip duration, or a combination thereof.

14. A computing system of data enhancement, wherein the computing system is configured to execute the method of any one of the preceding claims.

15. A computer program product comprising program code instructions stored on at least one computer readable medium to execute the method of any one of the claims 1 to 13, when said program code instructions are executed on a computer.
